# EUROPEAN PATENT SPECIFICATION

(11) **EP 4 344 860 B1**
(45) Date of publication and mention of the grant of the patent: **15.01.2025**
(21) Application number: 22382888.0
(22) Date of filing: 27.09.2022
(51) Int. Cl.: B29C 70/54, B29C 70/30, B29C 70/38

(54) **LAY-UP METHOD OF COMPOSITE AIRCRAFT PARTS COMPRISING AN OPENING**
AUFLEGEVERFAHREN VON VERBUNDFLUGZEUGTEILEN MIT EINER ÖFFNUNG
PROCÉDÉ DE DRAPAGE DE PIÈCES COMPOSITES D'AÉRONEF COMPRENANT UNE OUVERTURE

(43) Date of publication of application: 03.04.2024
(73) Proprietor: Airbus Operations, S.L.U., 28906 Getafe (Madrid) (ES)
(72) Inventor: MIGUEZ CHARINES, Yolanda, Madrid (ES); BALIGAND, Estelle, Madrid (ES); RECIO MELERO, Manuel, Madrid (ES); CABRERA RODRIGUEZ, Pedro, Madrid (ES)
(74) Representative: Elzaburu S.L.P.

(56) References cited:
- EP-A1- 0 557 158
- CN-A- 110 588 020

## Description

### FIELD OF THE INVENTION

The invention relates to a lay-up method of composite aircraft parts, specifically carbon-fiber-reinforced polymers (CRFPs), comprising openings such as manholes or handholes.

### BACKGROUND OF THE INVENTION

A lay-up process is a molding process for composite materials, in which the final laminate is obtained by overlapping a specific number of different layers or plies.

Each layer or ply has an orientation of 0º, 90º, +/-45º and is made up of several tows laid up with an orientation of 0, 90º, +/-45º. 0°, zero-degree fiber angle are oriented in the direction of the load of the part.

Aircraft parts comprise several openings to carry out inspection tasks, assembly of systems, repairs, etc. An opening is a space or gap that allows passage or access. For instance, a manhole is an opening in an aircraft surface to allow the passage of a man or equipment to perform the above-mentioned tasks. A handhole is an opening in an aircraft surface to allow the passage of a hand. Therefore, a handhole is smaller than a manhole and allows only hand or small inspection equipment to pass through.

NACA inlets openings are also known that are surface openings in wings or horizontal tail planes (HTP) for the installation of NACA inlets.

Openings are mainly ovals, ellipses, or circumferences. Openings comprise a perimeter, a major axis, a minor axis, a center where both axes cross, a first and a second semi-major axis and a first and a second semi-minor axis departing from the center.

Layers and tows having an orientation of 0º are parallel to the mayor axis of the opening and layers and tows having an orientation of 90º are parallel to the minor axis of the opening.

Currently, most aircraft structures having openings, handholes or manholes, in their configuration are made of carbon-fiber-reinforced polymers (CFRP). The composite material may be laid-up automatically with automatic lay-up machines (ATL) or fibre lay-up machines (FLU).

Automatic lay-up machines (ATL) typically provide tows of 300 mm, 150 mm σ 75 mm width that are laid-up to manufacture the composite laminate. The width of the tow is the dimension of the tow in a direction perpendicular to its longitudinal direction or laying-up orientation.

Fibre lay-up machines (FLU) typically provide tows of 6,35 mm (¼"), 12,7 mm (½") or 50,8 mm (2"). In the case of 2" (50,8 mm) tows, it is sometimes referred to as HDPreg (High deposition preimpregnated).

Typically, 'manholes' or 'handholes' area is laid-up with extra material or scrap material. This extra material or scrap material is only needed for manufacturing purposes as it allows a vacuum bag to be adapted during curing. Therefore, the inner dimensions of the opening or perimeter, such as the diameter, is made intentionally undersize, and after the curing stage adjusted to its final dimension, usually by trimming methods. It is known that, to facilitate the fitting of the vacuum bag, the extra material or scrap material has a ramp geometry that smooths the contour of the manhole or handhole.

Therefore, during the lay-up of parts made of carbon-fiber-reinforced polymers (CFRP) that have 'manholes' and/or 'handholes', these areas are laid-up by covering an area that is an 'offset' or extra material from the final geometry and ramped to facilitate vacuum bag fitting. However, the material used in the ramp area is an additional cost of material and money.

Alternatively, the manholes or handholes are laid-up in their entirety and the opening is cut afterwards.

CN 110 588 020 A discloses the features of the preamble of claim 1.

### SUMMARY OF THE INVENTION

In order to avoid the need for the above-mentioned ramp, the claimed method comprises the steps of laying-up composite tows forming plies that form a composite laminate.

In the claimed invention at least each tow having an orientation of 0º and being within the perimeter of the opening, i.e., having at least a part within the perimeter, comprises:
- a first gap located at approximately 3/5 of the length of the first semi-major axis from the center. The first gap being configured as a first elongated gap longitudinally perpendicular to the orientation of the tow, and
- a second gap located at approximately 3/5 of the length of the second semi-major axis from the center. The second gap being configured as a second elongated gap longitudinally perpendicular to the orientation of the tow.

Therefore, there is a first line and a second line approximately at 3/5 of the semi-major axis from the center of, for instance, the ellipse of the manhole or the radius of the circumference of the handhole. When each of the tows having an orientation of 0º crosses these lines, it comprises a gap.

In an embodiment, the automatic or manual laying-up of the tow shall be interrupted at the mentioned first and second lines and continued after the corresponding gap. The cutting and starting is performed leaving the mentioned gap. The tension of the tow is then released, facilitating the adaptation of the vacuum bag during curing.

Alternatively, if the laying up is made in a dedicated laying up tool, i.e., o tool without a curing purpose, the tows are laid-up to form the laminate and afterwards a cut of the thickness of the laid-up laminate is performed at the first line and at the second line of the opening to form the first and the second gap in each laid-up tow.

Thus, if the tool is only for laying up and not curing, it is possible to lay up the laminate to the full thickness and then make a cut in the two areas indicated to the full thickness of the laminate, without fear of damaging the tool, which could have some ridges in the area.

Without ramps, as disclosed in the state of the art, or without the mentioned gaps, as disclosed by the invention, the vacuum bag would not be able to fit the opening due to the tension of the tows. If the tows tension is high, the vacuum bag is not able to bend the tows with the vacuum pressure. As the contour of the tows is irregular, there could be a hole between tows. Although, the vacuum bag film has good elongation properties, it is not able to fit to these holes and it can be broken while curing.

The claimed invention has the following advantages over the previously mentioned state of the art:
- It allows the ramp area to be removed, as the adaptation of the vacuum bag is achieved thanks to the first and the second gaps.
- It reduces material waste and environmental impact by reducing the amount of material required for laying-up.
- It minimizes manufacturing scrap material needed, i.e., extra material required for proper manufacturing, and therefore it allows for material savings.

### DESCRIPTION OF THE FIGURES

To complete the description and to provide for a better understanding of the invention, a set of drawings is provided. Said drawings form an integral part of the description and illustrate preferred embodiments of the invention. The drawings comprise the following figures.
Figure 1 shows a schematic plan view and a cross-section of a manhole with scrap material or extra material and including a ramp area according to the state of the art.
Figure 2 shows a schematic plan view of an embodiment of a manhole according to an embodiment of the invention.

### DETAILED DESCRIPTION OF THE INVENTION

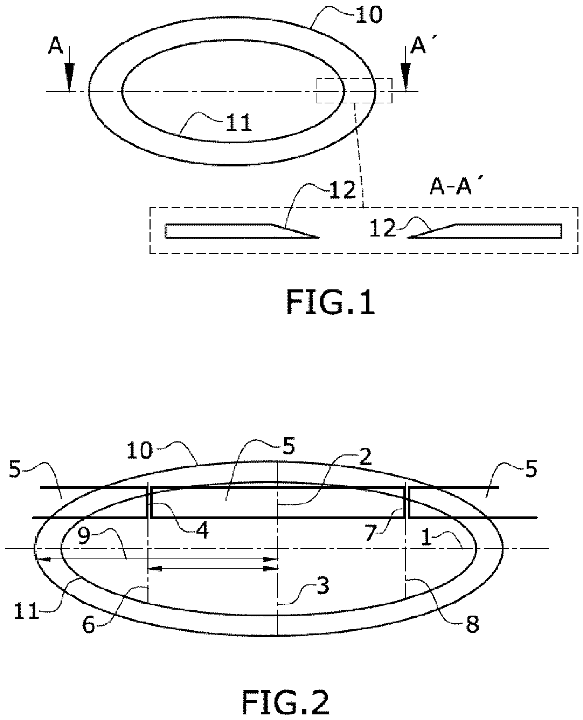

Figure 1 discloses a schematic plan view and a cross-section of a manhole with manufacturing scrap material including a ramp area according to the state of the art. The schematic manhole comprises scrap material (11) disclosing the intermediate dimension of the manhole and the perimeter (10) of the final dimensions of the manhole. The manufacturing scrap material (11) comprises an area with a ramp (12) for allowing the positioning of the vacuum bag during the curing process of the composite laminate.

Figure 2 discloses an opening comprising a perimeter (10), a major axis (1), a minor axis (2) and a center (3). One of the semi-major axis (9) is also depicted.

Although the shown embodiment discloses an opening being an ellipse, the major axis (1) and the minor axis (2) may have the same length so that the opening is a circumference.

Figure 2 discloses a tow (5) having an orientation of 0º.

According to an embodiment of the invention, the tow (5) being laid-up comprises a first gap (4) and a second gap (7) between longitudinally consecutive laminated tow (5) portions. The first gap (4) is located at a first line (6) at 3/5 of the first semi-major axis (9) from the center (3) of the opening. The second gap (7) is located at a second line (8) at approximately 3/5 of the second semi-major axis (9) from the center (3) of the opening.

The first gaps (4) and the second gaps (7) of the tows (5) of the laminate are configured as a first and a second elongated gap located within the perimeter (10) of the opening and longitudinally perpendicular to the orientation of the tow (5), that are at least those tows (5) having an orientation of 0º. In the shown embodiment, the tows (5) having an orientation of 0º are parallel to the major axis (1). Preferably, the first and second gaps (4, 7) do not extend beyond the perimeter (10) of the opening.

In an embodiment, the method comprises the following steps:
- laying-up a tow (5) having an orientation of 0º until approximately 3/5 of the first semi-major axis (9) of the opening from the center (3),
- cutting the laid-up tow (5) at approximately 3/5 of the first semi-major axis (9) of the opening in a direction perpendicular to the orientation of the tow (5),
- leaving the first gap (4) and continuing the lay-up of the tow (5) until approximately 3/5 of the second semi-major axis (9) of the opening from the center (3),
- cutting the laid-up tow (5) at approximately 3/5 of the second semi-major axis (9) of the opening in a direction perpendicular to the orientation of the tow (5),
- leaving the second gap (7) and continuing the lay-up of the tow (5),
- repeating the above steps with at least the rest of the tows (5) having an orientation of 0º and located within the perimeter (10) of the opening.

According to the above, the tows (5) having an orientation of 0° should all be cut. In an embodiment, the tows (5) having an orientation of +/-45° are cut only if the laminate has many layers with this orientation. This is due because it is easier for the vacuum bag to adapt to the tows (5) having an orientation of +/-45°, even if they are not cut, due to their lower stiffness in the bending direction.

Therefore, in an embodiment the tows (5) having an orientation of +/-45º and being within the perimeter (10) of the opening may also comprise the first gap (4) and/or the second gap (7) or no gap depending on its position within the perimeter (10) and the needs.

Thus, the tows (5) having an orientation of +/-45º may comprise:
- the first gap (4) located at approximately 3/5 of the length of the first semi-major axis (9) from the center (3). The first gap (4) being configured as a first elongated gap longitudinally perpendicular to the orientation of the tow (5), and/or
- the second gap (7) located at approximately 3/5 of the length of the second semi-major axis (9) from the center (3). The second gap (7) being configured as a second elongated gap longitudinally perpendicular to the orientation of the tow (5).

The above embodiment may additionally comprise the following steps:
- laying-up a tow (5) having an orientation of +/-45º,
- if the tow (5) crosses the first line (6) located approximately at 3/5 of the first semi-major axis (9) of the opening from the center (3), cutting the laid-up tow (5) at approximately 3/5 of the first semi-major axis (9) of the opening perpendicular to the orientation of the tow (5),
- leaving the first gap (4) and continuing the lay-up of the tow (5),
- if the tow (5) crosses a second line (8) located approximately at 3/5 of the second semi-major axis (9) of the opening from the center (3) cutting the laid-up tow (5) at approximately 3/5 of the second semi-major axis (9) of the opening from the center (3) perpendicular to the orientation of the tow (5),
- leaving the second gap (7) and continuing the lay-up of the tow (5).

As an alternative embodiment, in a first step, the tows (5), having an orientation of 0º, 90º or +/-45º, of the laminate are laid-up to form the laminate and, in a second step, a cut of the thickness of the laminate is performed at the first line (6), that is approximately 3/5 of the semi-major axis (9) of the opening, and at the second line (8), that is approximately 3/5 of the other semi-major axis (9) of the opening. The cut is configured as a first and a second elongated gap longitudinally perpendicular to the tows (5) having an orientation of 0º. It is understood as thickness of the composite laminate the smallest dimension of the laminate.

Therefore, the tows (5) are laminated without any cut or interruption at the first line (6), or the second line (8), and the gaps (4, 7) are formed afterwards by cutting the laminate.

This alternative embodiment is particularly useful if the lay-up tool is not the same as the curing tool. In that case, the cuts may be made without the risk of damaging the curing tool. The cuts can be made either with the blade of the laying head or manually. Full thickness cutting of the laminate should only be done if there is no risk of damaging the tool during curing.

In an embodiment, the first gap (4) and the second gap (7) are located in a range of 3/5 of the length of the first and the semi-major axis (9) from the center (3) +/- a width of the tow (5). Therefore, approximately means that the gap (4, 7) is located at 3/5 of the semi-major axis (9) plus the dimensions of the width of the tow (5) or minus the dimensions of the width of the tow (5).

In the shown embodiment, the gaps (4, 7) are perpendicular to a longitudinal axis of the laid-ups tows (5), i.e., are perpendicular to the direction of lay-up of the tows (5) with an orientation of 0º, which is parallel to the major axis (1). The tows (5) laid-up at a direction of 45º are cut perpendicularly to its laying-up direction.

Preferably, the width of the gaps (4, 7) is between 1,5 mm and 2 mm, i.e., the measurement of the gaps (4, 7) taken parallel to the mayor axis (1) of the opening (10).

The claimed invention is applicable to parts or laminates manufactured with CFRP tows (5) wider than 12,7 mm and having openings (10). The width of the tows (5) is taken perpendicularly to their laying-up direction. Examples of these aircraft parts are wings or horizontal tail planes (HTP).

It has to be considered that the geometry of the opening does not have dimensions that are a multiple of the tow (5) width, so the edges of the laid-up opening have an irregular geometry. The wider these tows (5) are, the more irregular the perimeter (10) is (the value of 12.7mm marks the limit of irregularity) and the more difficult it is for the vacuum bag to fit.

In addition, for certain layers, ff the created gaps (4,7) were inside the flying portion of the composite part, i.e., the gaps (4, 7) are located outside the opening, the position of the first (6) and second line (8) could be moved up to only one line coincident with the minor axis (2).

## Claims

1. Lay-up method of composite aircraft parts comprising an opening, the opening comprising a perimeter (10), a major axis (1), a minor axis (2), a center (3) and a first and a second semi-major axis (9) departing from the center (3), the lay-up method comprising the steps of laying-up composite tows (5) having an orientation of 0º, 90º or +/-45º forming plies which in turn form a composite laminate, the tows (5) having an orientation of 0º being parallel to the mayor axis (1) of the opening, the method being **characterized in that** at least each tow (5) having an orientation of 0º and being within the perimeter (10) of the opening comprises:
- a first gap (4) located at approximately 3/5 of the length of the first semi-major axis (9) from the center (3), the first gap (4) being configured as a first elongated gap longitudinally perpendicular to the orientation of the tow (5), and
- a second gap (7) located at approximately 3/5 of the length of the second semi-major axis (9) from the center (3), the second gap (7) being configured as a second elongated gap longitudinally perpendicular to the orientation of the tow (5).

2. Lay-up method of composite aircraft parts comprising an opening, according to claim 1, wherein the method comprises the following steps:
- laying-up a tow (5) having an orientation of 0º until approximately 3/5 of the first semi-major axis (9) of the opening from the center (3),
- cutting the laid-up tow (5) at approximately 3/5 of the first semi-major axis (9) of the opening perpendicular to the orientation of the tow (5),
- leaving the first gap (4) and continuing the lay-up of the tow (5) until approximately 3/5 of the second semi-major axis (9) of the opening from the center (3),
- cutting the laid-up tow (5) at approximately 3/5 of the second semi-major axis (9) of the opening perpendicular to the orientation of the tow (5),
- leaving the second gap (7) and continuing the lay-up of the tow (5),
- repeating the above steps with at least the rest of the tows (5) having an orientation of 0º and located within the perimeter (10) of the opening.

3. Lay-up method of composite aircraft parts comprising an opening, according to any preceding claim, wherein the tows (5) having an orientation of +/-45º and being within the perimeter (10) of the opening comprise:
- the first gap (4) located at approximately 3/5 of the length of the first semi-major axis (9) from the center (3), the first gap (4) being configured as a first elongated gap longitudinally perpendicular to the orientation of the tow (5), and/or
- the second gap (7) located at approximately 3/5 of the length of the second semi-major axis (9) from the center (3), the second gap (7) being configured as a second elongated gap longitudinally perpendicular to the orientation of the tow (5).

4. Lay-up method of composite aircraft parts comprising an opening, according to claims 2 and 3, wherein the method comprises the following steps:
- laying-up a tow (5) having an orientation of +/-45º,
- if the tow (5) crosses a first line (6) located approximately at 3/5 of the first semi-major axis (9) of the opening from the center (3), cutting the laid-up tow (5) at approximately 3/5 of the first semi-major axis (9) of the opening perpendicular to the orientation of the tow (5),
- leaving the first gap (4) and continuing the lay-up of the tow (5),
- if the tow (5) crosses a second line (8) located approximately at 3/5 of the second semi-major axis (9) of the opening from the center (3) cutting the laid-up tow (5) at approximately 3/5 of the second semi-major axis (9) of the opening from the center (3) perpendicular to the orientation of the tow (5),
- leaving the second gap (7) and continuing the lay-up of the tow (5).

5. Lay-up method of composite aircraft parts comprising an opening, according to claim 1, wherein in a first step the tows (5) are laid-up to form the laminate and in a second step a cut of the thickness of the laminate is performed at approximately 3/5 of the first and the second semi-major axis (9) of the opening (10) from the center (3) to form the first and the second gaps (4, 7) as a first and a second elongated gap longitudinally perpendicular to the tows (5) having an orientation of 0º.

6. Lay-up method of composite aircraft parts comprising an opening, according to any preceding claim, wherein the first gap (4) and the second gap (7) are located in a range of 3/5 of the length of the first and the semi-major axis (9) from the center (3) +/- a width of the tow (5).

7. Lay-up method of composite aircraft parts comprising an opening, according to any preceding claim, wherein the width in the direction parallel to the orientation of the tow (5) of the first and the second gaps (4, 7) is between 1,5 mm and 2 mm.

8. Lay-up method of composite aircraft parts comprising an opening, according to any preceding claim, wherein the major axis (1) and the minor axis (2) of the opening (10) have the same length.

9. Lay-up method of composite aircraft parts comprising an opening, according to any preceding claim, wherein the laminate tows (5) width is greater than 12,7 mm.

10. Lay-up method of composite aircraft parts comprising an opening, according to any preceding claim, wherein the aircraft part is a wing or a horizontal tail plane (HTP).

## Patentansprüche

1. Laminierverfahren für Verbundstoff-Luftfahrzeugteile mit einer Öffnung, wobei die Öffnung einen Umfang (10), eine Hauptachse (1), eine Nebenachse (2), eine Mitte (3) und eine erste und eine zweite Halbachse (9) umfasst, die von der Mitte (3) abweichen, wobei das Laminierverfahren die Schritte Laminieren von Verbundstoffsträngen (5) mit einer Ausrichtung von 0°, 90° oder +/-45° umfasst, die Schichten bilden, die wiederum ein Verbundstofflaminat bilden, wobei die Stränge (5) eine Ausrichtung von 0° aufweisen, die parallel zur Hauptachse (1) der Öffnung ist, wobei das Verfahren **dadurch gekennzeichnet ist, dass** zumindest jeder Strang (5), der eine Ausrichtung von 0° aufweist und innerhalb des Umfangs (10) der Öffnung liegt, Folgendes umfasst:
- einen ersten Spalt (4), der etwa 3/5 der Länge der ersten Halbachse (9) von der Mitte (3) entfernt liegt, wobei der erste Spalt (4) als ein erster länglicher Spalt ausgelegt ist, der in Längsrichtung senkrecht zur Ausrichtung des Strangs (5) steht, und
- einen zweiten Spalt (7), der etwa 3/5 der Länge der zweiten Halbachse (9) von der Mitte (3) entfernt liegt, wobei der zweite Spalt (7) als ein zweiter länglicher Spalt ausgelegt ist, der in Längsrichtung senkrecht zur Ausrichtung des Strangs (5) steht.

2. Laminierverfahren für Verbundstoff-Luftfahrzeugteile mit einer Öffnung nach Anspruch 1, wobei das Verfahren die folgenden Schritte umfasst:
- Laminieren eines Strangs (5) mit einer Ausrichtung von 0° bis etwa 3/5 der ersten Halbachse (9) der Öffnung von der Mitte (3),
- Schneiden des laminierten Strangs (5) bei etwa 3/5 der ersten Halbachse (9) der Öffnung senkrecht zur Ausrichtung des Strangs (5),
- Belassen des ersten Spalts (4) und Fortfahren mit dem Laminieren des Strangs (5) bis etwa 3/5 der zweiten Halbachse (9) der Öffnung von der Mitte (3),
- Schneiden des laminierten Strangs (5) bei etwa 3/5 der zweiten Halbachse (9) der Öffnung senkrecht zur Ausrichtung des Strangs (5),
- Belassen des zweiten Spalts (7) und Fortfahren mit dem Laminieren des Strangs (5),
- Wiederholen der oben genannten Schritte mit zumindest dem Rest der Stränge (5), die eine Ausrichtung von 0° aufweisen und sich innerhalb des Umfangs (10) der Öffnung befinden.

3. Laminierverfahren für Verbundstoff-Luftfahrzeugteile mit einer Öffnung nach einem vorhergehenden Ansprüche, wobei die Stränge (5), die eine Ausrichtung von +/-45° aufweisen und innerhalb des Umfangs (10) der Öffnung liegen, Folgendes umfassen:
- den ersten Spalt (4), der etwa 3/5 der Länge der ersten Halbachse (9) von der Mitte (3) entfernt liegt, wobei der erste Spalt (4) als ein erster länglicher Spalt ausgelegt ist, der in Längsrichtung senkrecht zur Ausrichtung des Strangs (5) steht, und/oder
- den zweiten Spalt (7), der etwa 3/5 der Länge der zweiten Halbachse (9) von der Mitte (3) entfernt liegt, wobei der zweite Spalt (7) als ein zweiter länglicher Spalt ausgelegt ist, der in Längsrichtung senkrecht zur Ausrichtung des Strangs (5) steht.

4. Laminierverfahren für Verbundstoff-Luftfahrzeugteile mit einer Öffnung nach Anspruch 2 und 3, wobei das Verfahren die folgenden Schritte umfasst:
- Laminieren eines Strangs (5) mit einer Ausrichtung von +/-45°,
- wenn der Strang (5) eine erste Linie (6) überquert, die sich etwa bei 3/5 der ersten Halbachse (9) der Öffnung von der Mitte (3) befindet, Schneiden des laminierten Strangs (5) bei etwa 3/5 der ersten Halbachse (9) der Öffnung senkrecht zur Ausrichtung des Strangs (5),
- Belassen des ersten Spalts (4) und Fortfahren mit dem Laminieren des Strangs (5),
- wenn der Strang (5) eine zweiten Linie (8) überquert, die sich etwa bei 3/5 der zweiten Halbachse (9) der Öffnung von der Mitte (3) befindet, Schneiden des laminierten Strangs (5) bei etwa 3/5 der zweiten Halbachse (9) der Öffnung von der Mitte (3) senkrecht zur Ausrichtung des Strangs (5),
- Belassen des zweiten Spalts (7) und Fortfahren mit dem Laminieren des Strangs (5).

5. Laminierverfahren für Verbundstoff-Luftfahrzeugteile mit einer Öffnung nach Anspruch 1, wobei in einem ersten Schritt die Stränge (5) zur Bildung des Laminats laminiert werden und in einem zweiten Schritt ein Schnitt der Dicke des Laminats bei etwa 3/5 der ersten und der zweiten Halbachse (9) der Öffnung (10) von der Mitte (3) durchgeführt wird, um den ersten und den zweiten Spalt (4, 7) als einen ersten und einen zweiten länglichen Spalt in Längsrichtung senkrecht zu den Strängen (5) mit einer Ausrichtung von 0° zu bilden.

6. Laminierverfahren für Verbundstoff-Luftfahrzeugteile mit einer Öffnung nach einem der vorhergehenden Ansprüche, wobei der erste Spalt (4) und der zweite Spalt (7) in einem Bereich von 3/5 der Länge der ersten und der Halbachse (9) von der Mitte (3) +/- eine Breite des Strangs (5) angeordnet sind.

7. Laminierverfahren für Verbundstoff-Luftfahrzeugteile mit einer Öffnung nach einem der vorhergehenden Ansprüche, wobei die Breite in der Richtung parallel zur Ausrichtung des Strangs (5) des ersten und des zweiten Spalts (4, 7) zwischen 1,5 mm und 2 mm beträgt.

8. Laminierverfahren für Verbundstoff-Luftfahrzeugteile mit einer Öffnung nach einem der vorhergehenden Ansprüche, wobei die Hauptachse (1) und die Nebenachse (2) der Öffnung (10) die gleiche Länge aufweisen.

9. Laminierverfahren für Verbundstoff-Luftfahrzeugteile mit einer Öffnung nach einem der vorhergehenden Ansprüche, wobei die Breite der Laminatstränge (5) größer als 12,7 mm ist.

10. Laminierverfahren für Verbundstoff-Luftfahrzeugteile mit einer Öffnung nach einem der vorhergehenden Ansprüche, wobei das Luftfahrzeugteil ein Flügel oder ein Höhenleitwerk (HTP) ist.

## Revendications

1. Procédé de confection de pièces composites d'aéronef comprenant une ouverture, l'ouverture comprenant un périmètre (10), un axe principal (1), un axe secondaire (2), un centre (3) et un premier et un second axe semi-principal (9) partant du centre (3), le procédé de confection comprenant les étapes de confection de câbles composites (5) ayant une orientation de 0°, 90° ou +/-45° formant des plis qui à leur tour forment un stratifié composite, les câbles (5) ayant une orientation de 0° étant parallèles à l'axe principal (1) de l'ouverture, le procédé étant **caractérisé en ce qu'**au moins chaque câble (5) ayant une orientation de 0° et se trouvant à l'intérieur du périmètre (10) de l'ouverture comprend :
- un premier espace (4) situé approximativement aux 3/5èmes de la longueur du premier axe semi-principal (9) à partir du centre (3), le premier espace (4) étant conçu sous forme de premier espace allongé longitudinalement perpendiculaire à l'orientation du câble (5), et
- un second espace (7) situé approximativement aux 3/5èmes de la longueur du second axe semi-principal (9) à partir du centre (3), le second espace (7) étant conçu sous forme de second espace allongé longitudinalement perpendiculaire à l'orientation du câble (5).

2. Procédé de confection de pièces composites d'aéronef comprenant une ouverture selon la revendication 1, dans lequel le procédé comprend les étapes suivantes :
- la confection d'un câble (5) ayant une orientation de 0° approximativement jusqu'aux 3/5èmes du premier axe semi-principal (9) de l'ouverture à partir du centre(3),
- la découpe du câble confectionné (5) approximativement aux 3/5èmes du premier axe semi-principal (9) de l'ouverture perpendiculairement à l'orientation du câble (5),
- le contour du premier espace (4) et la poursuite de la confection du câble (5) approximativement jusqu'aux 3/5èmes du second axe semi-principal (9) de l'ouverture à partir du centre (3),
- la découpe du câble confectionné (5) approximativement aux 3/5èmes du second axe semi-principal (9) de l'ouverture perpendiculairement à l'orientation du câble (5),
- le contour du second espace (7) et la poursuite de la confection du câble (5),
- la répétition des étapes ci-dessus avec au moins le reste des câbles (5) ayant une orientation de 0° et situés dans le périmètre (10) de l'ouverture.

3. Procédé de confection de pièces composites d'aéronef comprenant une ouverture selon l'une quelconque des revendications précédentes, dans lequel les câbles (5) ayant une orientation de +/- 45° et se trouvant dans le périmètre (10) de l'ouverture comprennent :
- le premier espace (4) situé approximativement aux 3/5èmes de la longueur du premier axe semi-principal (9) à partir du centre (3), le premier espace (4) étant conçu sous forme de premier espace allongé longitudinalement perpendiculaire à l'orientation du câble (5), et/ou
- le second espace (7) situé approximativement aux 3/5èmes de la longueur du second axe semi-principal (9) à partir du centre (3), le second espace (7) étant conçu sous forme de second espace allongé longitudinalement perpendiculaire à l'orientation du câble (5).

4. Procédé de confection de pièces composites d'aéronef comprenant une ouverture selon les revendications 2 et 3, dans lequel le procédé comprend les étapes suivantes :
- la confection d'un câble (5) ayant une orientation de +/-45°,
- si le câble (5) croise une première ligne (6) située approximativement aux 3/5èmes du premier axe semi-principal (9) de l'ouverture à partir du centre (3), la découpe du câble confectionné (5) approximativement aux 3/5èmes du premier axe semi-principal (9) de l'ouverture perpendiculairement à l'orientation du câble (5),
- le contour du premier espace (4) et la poursuite de la confection du câble (5),
- si le câble (5) croise une seconde ligne (8) située approximativement aux 3/5èmes du second axe semi-principal (9) de l'ouverture à partir du centre (3), la découpe du câble confectionné (5) approximativement aux 3/5èmes du second axe semi-principal (9) de l'ouverture à partir du centre (3) perpendiculairement à l'orientation du câble (5),
- le contour du second espace (7) et la poursuite de la confection du câble (5).

5. Procédé de confection de pièces composites d'aéronef comprenant une ouverture selon la revendication 1, dans lequel lors d'une première étape, les câbles (5) sont confectionnés pour former le stratifié et lors d'une seconde étape, une découpe de l'épaisseur du stratifié est effectuée approximativement aux 3/5èmes du premier et du second axe semi-principal (9) de l'ouverture (10) à partir du centre (3) pour former le premier et le second espace (4, 7) sous forme d'un premier et d'un second espace allongés longitudinalement perpendiculaires aux câbles (5) ayant une orientation de 0°.

6. Procédé de confection de pièces composites d'aéronef comprenant une ouverture selon l'une quelconque des revendications précédentes, dans lequel le premier espace (4) et le second espace (7) sont situés dans une plage de 3/5èmes de la longueur du premier et de l'axe semi-principal (9) à partir du centre (3) +/- une largeur du câble (5).

7. Procédé de confection de pièces composites d'aéronef comprenant une ouverture selon l'une quelconque des revendications précédentes, dans lequel la largeur dans la direction parallèle à l'orientation du câble (5) du premier et du second espace (4, 7) est comprise entre 1,5 mm et 2 mm.

8. Procédé de confection de pièces composites d'aéronef comprenant une ouverture selon l'une quelconque des revendications précédentes, dans lequel l'axe principal (1) et l'axe secondaire (2) de l'ouverture (10) présentent la même longueur.

9. Procédé de confection de pièces composites d'aéronef comprenant une ouverture selon l'une quelconque des revendications précédentes, dans lequel la largeur des câbles stratifiés (5) est supérieure à 12,7 mm.

10. Procédé de confection de pièces composites d'aéronef comprenant une ouverture selon l'une quelconque des revendications précédentes, dans lequel la pièce d'aéronef est une aile ou un empennage horizontal (HTP).
